# EUROPEAN PATENT SPECIFICATION

(11) **EP 0 460 146 B1**
(45) Date of publication and mention of the grant of the patent: **14.12.1994**
(21) Application number: 91900257.6
(22) Date of filing: 18.12.1990
(51) Int. Cl.: A22C 13/00

(54) **TUBING USED FOR ENCASING FOOD PRODUCTS AND A METHOD FOR MANUFACTURING THE TUBING**
UMHÜLLUNG ZUM VERPACKEN VON NAHRUNGSPRODUKTEN UND VERFAHREN ZU IHRER HERSTELLUNG
ENVELOPPES SERVANT A ENROBER LES ALIMENTS ET PROCEDE DE FABRICATION

(30) Priority: 22.12.1989 FI 896229; 27.07.1990 FI 903758; 09.11.1990 FI 905568
(43) Date of publication of application: 11.12.1991
(73) Proprietor: OY VISKO AB, 10901 Hanko (FI)
(72) Inventor: HÖGLUND, Boris, SF-10901 Hanko (FI); KALM, Vidar, P.O. Box 22 SF-10901 Hanko (FI); KING, Edmund, P.O. Box 22 SF-10901 Hanko (FI)
(74) Representative: Jones, Michael Raymond
(86) International application number: FI9000302
(87) International publication number: WO9109530

(56) References cited:
- US-A- 3 104 682
- US-A- 4 195 054
- US-A- 4 222 821
- US-A- 4 590 107

## Description

The invention relates to a light-weight tubing and method of manufacturing the same, the tubing being composed mainly of a long-fibred paper substrate which is wet-strengthened with regenerated cellulose from viscose, and subsequently further regenerated cellulose from viscose, and being used for encasing food products such as in the manufacture of sausages. In terms of its elasticity properties, the said tubing corresponds to collagen tubing, but is superior in terms of its strength and heat-resistibility and as such is atypical of heavier-weight fibrous cellulose casings of the prior art of inferior elasticity.

Food product casings are used in the packaging of various kinds of meat, sausage and other food products. The basic material used in the manufacturing of casing materials is cellulose (cellophane, regenerated cellulose, cellulose hydrate), cellulose derivatives, such as cellulose ether, proteins, collagens and other natural or synthetic polymer webs, films or laminates comprising combinations of these.

The properties of tubings made of collagen, as well as tubings made of cellophane, are inadequate owing to their lack of strength and their poor heat resistibility during the sausage manufacturing process. Collagen tubings, for example, split even at a temperature of 80°C. Collagen and cellulose tubings are always heavier than corresponding fibre-reinforced tubings. Despite the weight of the collagen and the cellulose tubing walls, the diameter values of the tubing produced vary. Due to these reasons, the productivity of sausage manufacturing is low.

Another practice is to use fibre-reinforced cellulose casings from webs manufactured from paper and/or rice paper (such as silkwood), using mulberry, or other naturally occurring fibres such as hemp (e.g. abaca or manilla hemp), flax fibres, or synthetic fibres (e.g. polyamide, polyester, and polyacryl nitrile fibres), and even mixtures of the said fibres. The process of manufacturing the paper to be used in the aforementioned tubing material, such as manilla hemp based paper has been described in US Patent Nos. 3 433 663, 3 135 613 and 4 222 821, for instance. The impediments to using the known fibre-reinforced cellulose tubings are the high price and inelasticity of the tubing resulting from their structure. Due to these reasons, the area of productability of such tubing material is limited. They cannot, for instance, be used to replace collagen tubing.

US-A-4222821 describes laboratory and pilot machine making trials and suggests superior ways to confer wet strength or alkali resistance, other than by viscose alone, to manilla hemp substrates for subsequent viscosing operations by, for example, sausage casing or tubing manufactures. The paper basis weights disclosed in US-A-4222821 are in the range 19.1 to 27.5 g/m².

A tubing produced in accordance with this invention represents a decisive improvement with regard to the aforementioned shortcomings.

According to a first aspect of the present invention, there is provided a method of manufacturing a tubing to be used for the packaging of food products (e.g. sausage), which method comprises the steps of:-forming a base material made mainly of long-fibred manilla hemp (abaca) paper previously wet-strengthened by using regenerated cellulose, into a tube; impregnating the tube with viscose; passing the tube through one or more acid and/or salt treatment bath(s) in the course of which treatments the viscose coagulates due to the effect of the acid and/or salts; and regenerating the viscose into cellulose in such a manner that the fibres become embedded by regenerated cellulose to form a tubing, wherein the method uses manilla hemp paper having an air-dry weight of no more than 15 g/m².

According to a second aspect of the present invention, there is provided a tubing capable of being used for the packaging of food products, which tubing comprises a base material of long-fibred manilla hemp paper and regenerated cellulose, the material having been previously wet-strengthened by using regenerated cellulose wherein the long-fibred manilla hemp paper has an air-dry weight of no more than 15 g/m².

The unique advantage of this invention is the combination of properties achieved via the light structure; namely, the excellent further processing possibilities and the property of high heat resistibility facilitated by the tubing in comparison to collagen tubings coupled with the excellent strength properties, and superior elasticity of the tubing when compared to conventional fibrous cellulose tubings. This combination of properties means a wide area of applicability and provides a basis for a considerable higher productivity both in the manufacture of the tubing as well as in the meat processing industry.

While elasticity is generally held to be an advantage of collagen tubing, the observation has been made that the lighter fibre-reinforcement in accordance with this invention results in strength almost the equivalent of the previously used heavier, fibre-reinforcement, but still elasticity which is not only of the same class as that of collagen tubing, but exceeds it. The thinness that results from the loss of weight of the largely manilla hemp-based paper, permits the viscose to better penetrate the matrix between the fibres. This in turn leads to the formation of a strong composite material bond between the cellulose of the viscose and the manilla hemp, which provides also a smoother inner surface of the tubing. It has also been observed that the curing process of salami or the like packed in tubing in accordance with this invention is speeded up.

Hoselike tubings, in which the aforementioned webs are used, can be manufactured by applying methods and devices which are well known to the people in this profession. Such methods have been described in US Patent No. 2 144 899, while the devices referred to are described in No. 2 105 273, for instance.

In the following, while this invention is explained by referring to examples, the said examples are not intended to limit the invention, but to present and provide grounds for the inventive idea.

Viscose manufactured in the known manner was necessary for the manufacturing of the tubing. During the manufacturing of the viscose, wood cellulose with a high α-cellulose content was treated with lye in order to produce alkali cellulose. After controlled ageing of the alkali cellulose carbon disulphide was mixed into the compressed and shredded mass. The result of the reaction was cellulose xanthogenate which was then dissolved in lye, whereby the viscose was produced.

In order to manufacture fibre reinforced tubing, paper composed mainly of manilla hemp which has been previously wet-strengthened by using regenerated cellulose and then unreeled from a roll was bent to form a tube. Next, the tube was impregnated using viscose applied from the nozzle in the aforementioned manner.

Immediately thereafter, the tube was immersed in a bath of salt/sulphuric acid whilst treating the inside of the tubing also with the same salt/acid mixture which caused the viscose to coagulate and regenerate into cellulose. The tubing which for the most part was treated in a flattened form was then directed into a water bath and then into a bath of heated glycerine. Finally, the tubing was passed through press rollers to be dried inside a drying canal where air was blown into the tubing and the tubing was then rolled up. In accordance with this invention, the weight of the paper manufactured mainly from manilla hemp was tested and found to be c. 13 g/m² within a range of ±1 g/m². The weight of the paper is given as air-dry weight after keeping the paper four hours at a temperature of 25 °C with a relative air humidity of 50 % in order to attain equilibrium conditions after the removal of the test specimen from its storage packaging. It was noted that the consumption of viscose was reduced in the manufacturing of tubing reinforced with this material.

The values presented in the table are employed to compare the elasticity and burst strength properties of the Visko Light tubing in accordance with this invention, the air-dry weight of the manilla hemp paper used in it being 13 g/m² with a tolerance of ±1 g/m², with the corresponding properties of collagen tubing and heavier tubings. The size of the tubing is expressed as the trade size, which is the diameter of the tubing before it is filled. It is necessary to point out that the earlier practice was to use long-fibred material whose weight varied according to the diameter.

The elasticity of the tubing is defined as the amount of stretch per unit of pressure when filled in the wet state after soaking 30 minutes in water at 20 °C. These values are computed in the following manner.

Visko Light, size 65:
Diameter of tubing, 67.7 mm at a filling pressure of 15 kPa;
Diameter of tubing, 73.3 mm at a filling pressure of 50 kPa,
which results in
Elasticity = (73.3 - 67.7)/(50 - 15) = 0.16 mm/kPa.

The bursting strength of the tubing was determined in the aforementioned wet state and the values set out in tabular form.

The strength and elasticity properties were determined at a temperature of c. 20 °C, immediately after removing the tubing from the water used for soaking. The tubing weight determinations were conducted in the prevailing laboratory conditions, air-dry and without raising the temperature. Oven drying was not used.

The data thus obtained confirm the excellent elasticity properties of Visko Light tubings as compared to the heavier fibre-reinforced tubing and collagen, which up till now has been considered to offer the best combination of elasticity in relation to diameter stability. The values presented in the table indicate that Visko Light tubings are proof of the Visko Light tubings' equivalence in terms of elasticity under pressure to collagen and even superior to collagen. With respect to burst strength, the Visko Light tubings proved to be superior to collagen and only slightly weaker than a conventional tubing composed of heavier fibrous material. Due to its thinness, the amount of Visko Light tubing that can be crumpled or shirred to form a "grub" or "stick" is greater than that of previously used heavier tubing. When compared to collagen, for instance, a grub of Visko Light contains twice as much tubing as a collagen grub of equal length.

**TABLE**

| Product | Size mm | Manilla hemp paper weight, g/m² | Tubing c. weight g/m | Tubing burst strength kPa | Elasticity mm/kPa |
|---|---|---|---|---|---|
| Visko Light | 35 | 13 | 7,4 | 132 | 0,08 |
| | 50 | 13 | 10,0 | 92 | 0,10 |
| | 65 | 13 | 14,9 | 74 | 0,16 |
| | 80 | 13 | 18,2 | 65 | 0,22 |
| | 90 | 13 | 22,7 | 59 | 0,25 |
| | 105 | 13 | 23,9 | 55 | 0,31 |
| Heavy fibre material tubing | 35 | 17 | 8,2 | 147 | 0,06 |
| | 50 | 17 | 11,0 | 105 | 0,08 |
| | 65 | 19 | 17,5 | 93 | 0,11 |
| | 80 | 21 | 24,2 | 86 | 0,14 |
| | 90 | 21 | 27,3 | 79 | 0,16 |
| | 105 | 23 | 30,4 | 75 | 0,21 |
| Collagen tubing | 47 | | 11,0 | 73 | 0,10 |
| | 55 | | 13,6 | 80 | 0,11 |
| | 65 | | 20,7 | 70 | 0,10 |
| | 75 | | 22,0 | 52 | 0,14 |
| | 90 | | 35,3 | 50 | 0,21 |
| | 100 | | 28,6 | 46 | 0,20 |

The curing process of salami was speeded up inside the Visko Light tubing. Empirically, the curing process for Lübeck salami when placed inside a known and heavier fibre tubing 62 mm in diameter takes three weeks, which is to say that it loses 36 % of its weight during the three weeks. When Visko Light tubing 70 mm in diameter is used, Lübeck salami takes three weeks to cure (36 % mass reduction), although the Visko Light tubing contains c. 25 % more mass. The curing conditions were the same in these two cases. Other examples based on the same size 70 mm casing resulted in a Lübeck salami which was uniformly cured and dried after only three weeks processing in Visko Light casing whilst the same product took a further week in processing to reach the same uniformity in a heavy weight fibrous casing with attendent greater product-weight losses.

The Bendtsen test used in the paper industry was used to determine the smoothness of the inner surface of the tubing. The test gave Visko Light tubing values of c. 700-800 cm³/min in average while the heavier tubing used in the comparison had values exceeding 1000 cm³/min in average.

It is necessary to point out that in the above the invention has been described with reference to only two of its advantageous implementation. This is in no way intended to limit the invention which will be described in accordance with the scope of the inventive idea as defined by the following patent claims.

## Claims

1. A method of manufacturing a tubing to be used for the packaging of food products (e.g. sausage), which method comprises the steps of:- forming a base material made mainly of long-fibred manilla hemp (abaca) paper previously wet-strengthened by using regenerated cellulose, into a tube; impregnating the tube with viscose; passing the tube through one or more acid and/or salt treatment bath(s) in the course of which treatments the viscose coagulates due to the effect of the acid and/or salts; and regenerating the viscose into cellulose in such a manner that the fibres become embedded by regenerated cellulose to form a tubing, wherein the method uses manilla hemp paper having an air-dry weight of no more than 15 g/m².

2. A method according to claim 1, characterized in that the paper used possesses an air-dry weight of no more than 13 g/m² within a range of ±1 g/m².

3. A method according to claim 1 or 2, characterized in that the diameter of the tubing produced is less than or equal to c. 165 mm.

4. A tubing capable of being used for the packaging of food products, which tubing comprises a base material of long-fibred manilla hemp paper and regenerated cellulose, the material having been previously wet-strengthened by using regenerated cellulose wherein the long-fibred manilla hemp paper has an air-dry weight of no more than 15 g/m².

5. A tubing according to claim 4, characterized in that the long-fibred manilla hemp paper used possesses an air-dry weight of no more than 13 g/m² within a range of ± 1 g/m².

## Patentansprüche

1. Verfahren zur Herstellung eines zum Verpacken von Nahrungsmittelprodukten (z. B. Wurst) verwendbaren Schlauchs, mit den folgenden Schritten:
Formen eines Basismaterials, welches aus langfaserigem Manilafaser-(Abaca)-Papier besteht, das, nachdem es unter Verwendung von Regeneratzellulose naßfest gemacht wurde, zu einem imprägnierten Schlauch;
Imprägnieren des Schlauchs mit Viskose;
Leiten des Schlauchs durch mehrere Säure- und/oder Salzbehandlungsbäder, wobei die Viskose im Verlauf der Behandlungen aufgrund der Wirkung der Säure und/oder der Salze koaguliert; und
Regenerieren der Viskose zu Zellulose derart, daß die Fasern zur Bildung eines Schlauchs in der Regeneratzellulose eingebettet werden,
wobei das Verfahren Manilafaser-Papier verwendet, das im luftgetrockneten Zustand ein Gewicht von nicht mehr als 15 g/m² aufweist.

2. Verfahren nach Anspruch 1, dadurch gekennzeichnet, daß das verwendete Papier im luftgetrockneten Zustand ein Gewicht von nicht mehr als 13 g/m² innerhalb eines Bereichs von ±1 g/m² aufweist.

3. Verfahren nach Anspruch 1 oder 2, dadurch gekennzeichnet, daß der Durchmesser des hergestellten Schlauchs kleiner als oder gleich ungefähr 165 mm ist.

4. Schlauch zur Verwendung zum Verpacken von Nahrungsmittelprodukten, der ein Basismaterial aufweist, welches aus langfaserigem Manilafaser-Papier und Regeneratzellulose besteht, wobei das Material zuvor unter Verwendung von Regeneratzellulose naßfest gemacht ist, bei dem das verwendete langfaserige Manilafaser-Papier im luftgetrockneten Zustand ein Gewicht von nicht mehr als 15 g/m² aufweist.

5. Schlauch nach Anspruch 4, dadurch gekennzeichnet, daß das verwendete langfaserige Manilafaser-Papier im luftgetrockneten Zustand ein Gewicht von nicht mehr als 13 g/m² innerhalb eines Bereichs von ±1 g/m² aufweist.

## Revendications

1. Procédé de fabrication d'une enveloppe tubulaire destinée à être utilisée pour le conditionnement de produits alimentaires (par exemple saucisses), composé principalement d'une matière de base constituée de papier à longues fibres de chanvre de Manille (abaca) qui, après avoir été renforcé par voie humide par recours à de la cellulose reconstituée est mis en forme de tube, imprégné de viscose, après quoi la matière imprégnée traverse un ou plusieurs bains d'acide et/ou de sels, la viscose coagulant au cours de ces traitements suite à l'effet de l'acide et/ou des sels, et est ensuite régénérée en cellulose de telle sorte que les fibres sont englobées par la cellulose reconstituée pour former une enveloppe tubulaire, selon lequel le papier de chanvre de Manille utilisé possède un poids spécifique sous air sec ne dépassant pas 15 g/m².

2. Procédé selon la revendication 1, caractérisé en ce que le papier utilisé possède un poids spécifique sous air sec ne dépassant pas 13 g/m², avec une tolérance de ± 1 g/m².

3. Procédé selon la revendication 1 ou 2, caractérisé en ce que le diamètre de l'enveloppe tubulaire produite est inférieur ou égal à environ 165 mm.

4. Enveloppe tubulaire destinée à être utilisée pour le conditionnement de produits alimentaires (par exemple boyaux à saucisses), composée principalement d'une matière de base constituée de papier à longues fibres de chanvre de Manille, ladite matière ayant été renforcée par voie humide à l'aide de cellulose reconstituée, et ladite matière de base étant également constituée de cellulose reconstituée, selon laquelle le papier de chanvre de Manille utilisé possède un poids spécifique sous air sec ne dépassant pas 15 g/m².

5. Enveloppe tubulaire selon la revendication 4, caractérisée en ce que le papier à longues fibres de chanvre de Manille utilisé possède un poids spécifique sous air sec ne dépassant pas 13 g/m², avec une tolérance de ± 1 g/m².
